(19) Europäisches Patentamt

European Patent Office

Office européen des brevets

(11) **EP 1 655 911 A2**

(12) **EUROPEAN PATENT APPLICATION**

(43) Date of publication:
10.05.2006 Bulletin 2006/19

(51) Int Cl.:
*H04L 12/56* (2006.01)     *H04L 12/64* (2006.01)

(21) Application number: 05256493.7

(22) Date of filing: 20.10.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 04.11.2004 US 981163

(71) Applicant: **Zultys Technologies
Sunnyvale, CA 94085 (US)**

(72) Inventor: **Talalai, Alexander
Sunnyvale, CA 94085 (US)**

(74) Representative: **Hallam, Arnold Vincent et al
Marks & Clerk
144 New Walk
Leicester LE1 7JA (GB)**

(54) **Audio receiver having adaptive buffer delay**

(57)     Generally speaking, there are provided systematic techniques for increasing and decreasing jitter buffer delay. The disclosed techniques typically utilize various combinations of: evaluating received data over a specified interval, increasing a recommended buffer delay if the interval delay exceeds a first threshold and decreasing the recommended buffer delay if the interval delay is less than a second threshold, causing the recommended buffer delay to decrease over time until an underflow condition is identified, and/or increasing the recommended buffer delay in response to identifying the underflow condition.

FIG. 3

**Description**

BACKGROUND OF THE INVENTION

**Field of the Invention**

The present invention pertains to an audio receiver having an adaptive buffer delay, and is particularly applicable to a voice-over-IP (Internet Protocol), or VoIP, receiver, such as may be used for telephone communications over the Internet.

**Description of the Related Art**

Recently, telephone communications over the Internet and VoIP within an office setting have become increasingly popular. The former has been primarily due to lower cost and the latter has been primarily due to better flexibility (including more seamless integration with the office's computer system) than earlier telephone systems could provide.

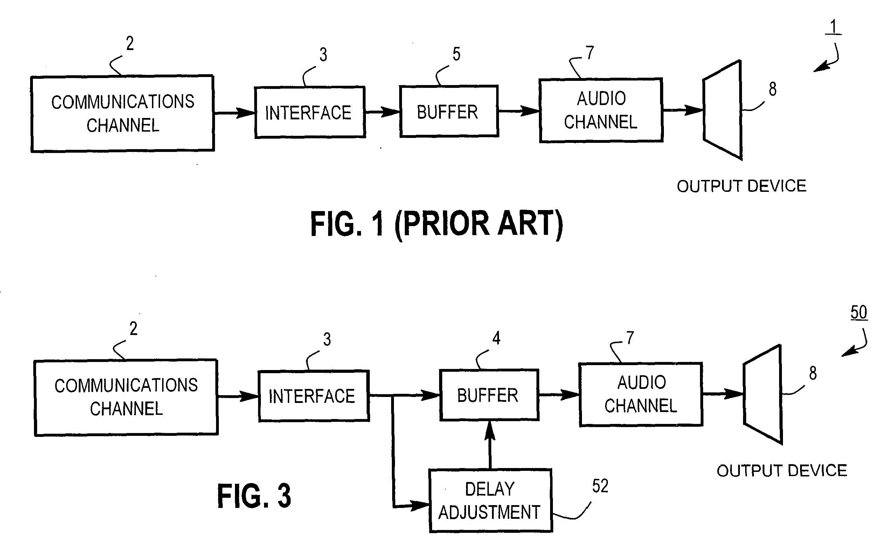

A simple block diagram of the receiving portion of a conventional VoIP system is illustrated in Figure 1. In Figure 1, audio communications are received as packet-based digital data through a communications channel 2, which typically is the Internet or some other Internet protocol (IP) network. Network interface circuitry/software 3 provides such packets to a delay buffer 5, which commonly is referred to as a jitter buffer. The output of buffer 5 is a stream of digital audio data that are processed digitally and then converted to an analog audio signal in audio channel 7 before being played through a speaker, headphone set or other audio output device 8.

Conventionally, the jitter buffer 5 has been an essential component of a VoIP receiver. Its purpose is to compensate for distortions brought about by the network or other communications channel 2, such as variable delays of data packets, packet loss and changing of packet order. To do that, the jitter buffer 5 holds received audio data for some period of time before forwarding it to the audio channel 7. Ideally, this delay will be sufficient to permit appropriate reordering of the data packets and adjustment of the relative packet delays, thereby replicating the transmitted audio signal as closely as possible (i.e., to the extent that data packets are not lost or hopelessly delayed).

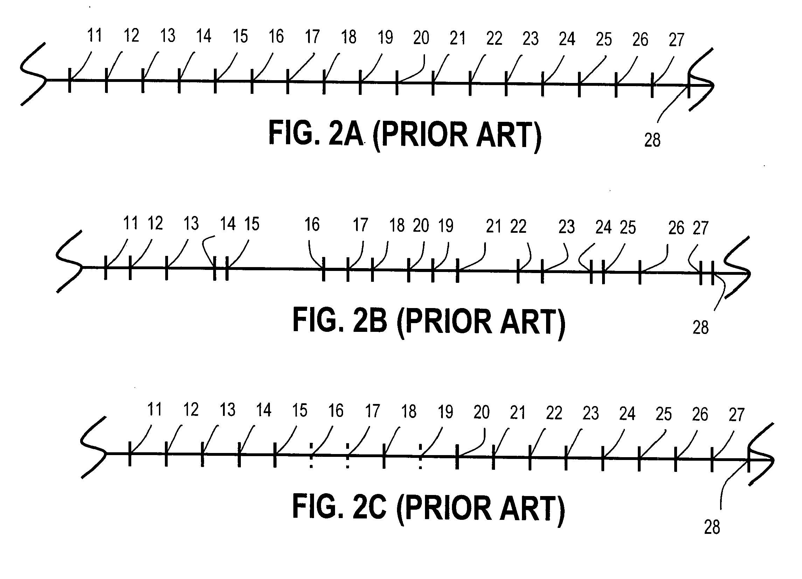

The process is now described in more detail with reference to Figures 2A-C. A transmitter (not shown) splits audio data into fragments. Usually, such fragments have the same length in time. Then, the transmitter encoder converts these audio fragments into digital packets 11-28 and sends these packets to a receiver over a network or other communications channel 2. If we ignore variations in the amount of time that is necessary for encoding and sending packets, then the time interval between the sending of two consecutive packets is length of the second packet in time as an audio fragment (i.e., a packet is ready at the end of its audio fragment). Thus, the transmission data appears as a sequence of regularly timed data packets 11-28, as shown in Figure 2A.

If the receiver 1 were to obtain these packets immediately after the transmitter sent them (or with a constant delay) and all packets have the same length, then audio reproduction at the receiving end would be straightforward. The receiver 1 simply would convert each digital packet into an audio fragment immediately after the packet was received. The audio fragment would then be reproduced immediately by the receiver's audio channel 7. As soon as the audio channel 7 would be done with that fragment, the receiver 1 would have received the next digital packet and converted it into an audio fragment.

Such an ideal scenario can break down for a number of different reasons. The most important of these reasons is the existence of network distortions. Variation in packet length can be a cause also.

Some of these distortions are illustrated in Figure 2B, which illustrates a timeline showing when the transmitted packets (shown in Figure 2A) initially are received. In an ideal communications channel 2 having a uniform delay, Figure 2B would be an exact replica of Figure 2A, but shifted to the right to account for the uniform delay. However, Figure 2B instead more accurately reflects a real-world communications channel 2 in which packets are delayed by different amounts of time. In fact, in certain cases a packet 19 that was transmitted prior to another packet 20 can arrive at the receiver 1 after the subsequently transmitted packet 20. Not shown in Figure 2B is the situation in which certain transmitted packets are completely lost in the communications channel 2, i.e., never reaching the receiver 1.

There are two main problems that can be observed. The first is underflow. The audio channel 7 is done with the current audio fragment, but the next packet has not yet been received. The second problem is overflow. A packet has been received, but the audio channel 7 is not done with the previous audio fragment. As will be seen below, these problems are related, and a trade-off can be made between them by adjusting the delay time of jitter buffer 5.

The second problem can be easily resolved. The receiver simply includes a storage unit for storing packets that arrive prior to their turn to be processed by the audio channel. That unit is what we call jitter buffer 5. The purpose of the jitter buffer 5 is to store packets, to sort them in proper order and to forward them to the audio channel 7 on time. It transforms the overflow situation into a normal mode of the receiver 1 operation.

In order to make it possible for the jitter buffer 5 to control data flow and provide the audio channel 7 with digital packets in the proper sequence and at the proper time, the transmitter includes in each digital packet its timestamp, i.e., the time when the audio fragment starts, as well as the sequence number of the packet in the packet stream.

The conventional jitter buffer 5 provides a delay between the moment when a packet was received by the receiver and when the audio channel starts to reproduce it. That delay is the jitter buffer delay.

By setting the jitter buffer delay to the maximum expected delay of communications channel 2, the problem of underflow can be eliminated entirely and the buffer simply would need to be large enough to accommodate the expected overflow. However, that solution typically is unsatisfactory for the following reasons.

A one-way audio delay primarily includes, besides audio channel delays, the sum of the following three delays:

- Quantification delay. This delay is equal to the length of the fragment and results because each packet can only be transmitted after its audio fragment ends.
- Network delay. This is the amount of time necessary to bring a packet from the transmitter to the receiver.
- Jitter buffer delay. This delay was mentioned above and is described in more detail below.

For telephone conversations, round-trip delay, which is sum of the one-way delays in both directions, defines response time. It may become a decisive negative factor if the delay grows above some threshold. This often would be the case if, as suggested above, the buffer delay were simply set to the maximum expected delay of communications channel 2.

Accordingly, the buffer delay conventionally is selected as a trade-off between minimizing packet loss and minimizing one-way or two-way delays. Figure 2C illustrates a representative output of buffer 5 after such a trade-off has been made. In Figure 2C, it is assumed that the buffer 5 has a constant delay. Then, the received data packets 11-28 (except as noted below) are received and stored into buffer 5 in accordance with the timeline shown in Figure 2B. Finally, the data packets are read out of buffer 5 in accordance with the timeline shown in Figure 2C, which generally is a shifted version of the sequence shown in Figure 2A (except as noted below).

Because the delay of buffer 5 is limited to less than the maximum expected delay of communications channel 2, certain of the data packets (i.e., packets 16, 17 and 19 in the present example) arrive at the receiver 1 too late to be provided in the replicated sequence that is shown in Figure 2C. As a result, those late packets are simply omitted in the audio reproduced at the receiver 1, resulting in silent gaps (or gaps filled in by noise or other artificial content) in the audio output. In other words, a decision has been made that the audio degradation caused by this particular expected frequency of dropped packets would be less annoying to the listener than introducing additional two-way delay into the telephone conversation.

The example described above involves a fixed-delay jitter buffer 5. Adaptive buffers (having a delay time that changes) also have been proposed in order to adjust to changing conditions of the communications channel 2.

## SUMMARY OF THE INVENTION

However, the present inventor has found inefficiencies with each of the existing adaptive jitter buffers. Accordingly, the present invention is directed to an improvement over conventional adaptive jitter buffers. Generally speaking, the present invention provides a systematic technique for increasing and decreasing jitter buffer delay by utilizing various combinations of: evaluating received data over a specified interval, increasing a recommended buffer delay if the interval delay exceeds a first threshold and decreasing the recommended buffer delay if the interval delay is less than a second threshold, causing the recommended buffer delay to decrease over time until an underflow condition is identified, and/or increasing the recommended buffer delay in response to identifying the underflow condition.

Thus, in one aspect the invention is directed to receiving and processing digital audio signals, in which packets of digital audio data are received across a transmission channel, and are buffered using a buffer delay so as to accommodate different packet delays through the transmission channel. The buffered packets are then processed to produce an output audio signal. The buffer delay periodically is adjusted based upon a recommended buffer delay, the recommended buffer delay being recurrently updated, starting from an initial value, as follows. Initially, an interval of the received packets is selected, and a function of at least one packet delay over the selected interval is calculated (e.g., the maximum of the packet delays over the selected interval) in order to generate an interval packet delay. The recommended buffer delay is increased (e.g., in an amount that is independent of packet delays during the interval, such as a predetermined constant value) if the interval packet delay exceeds a first threshold (e.g., the current value of the recommended buffer delay) and is decreased if the interval packet delay is less than a second threshold, the second threshold being not greater than the first threshold. The foregoing recommended-buffer-delay updating steps are then repeated (e.g., substantially continuously over successive contiguous intervals of the received packets). According to this aspect of the invention, each interval of the received packets has a duration that is based on at least one packet delay during such interval. Preferably, packet delay for a subject packet is determined based upon a transmission timestamp included within the subject packet.

By virtue of the foregoing arrangement, particularly the recommended-buffer-delay updating steps, jitter buffer delay often can be maintained at an appropriate level, providing an appropriate trade-off between minimizing packet loss and minimizing communications delay.

In more particular aspects of the invention, the length of each successive interval is determined by initially using the packet delay for the first received packet as a delay base and then systematically increasing the delay base for each successive received packet until the delay base exceeds the packet delay (e.g., raw packet delay) for a subsequent received packet, at which point the specified interval is deemed complete, a new interval is deemed to start and the delay base is set to the packet delay for the last packet of the previous interval. Such a technique can provide for variable-length intervals that tend to end at an appropriate time for modifying the actual delay of a jitter buffer.

Preferably, the amount of incremental increase in the delay base for each received packet is based on a measure of the duration of the current interval, with the measure of the duration of the current interval being based on the difference in receive times (although the difference in transmit times instead may be used) with respect to a currently received packet. As a result, an interval can be deemed complete after a sufficiently long period of increased delay times.

Also, a range preferably exists between the first threshold and the second threshold, and the recommended buffer delay is increased, but by a smaller amount, if the interval packet delay falls within such range. Such a technique can help to maintain the recommended buffer delay within a fairly narrow range, provided that significantly larger packet delays are not detected.

Preferably, the above-referenced amount of decrease in the recommended buffer delay is based on the amount of time since the recommended buffer delay was last increased. For example, the amount of such decrease might monotonically increase based on the amount of such time.

In the preferred embodiments of the invention, a new interval is deemed to begin whenever there is a sudden increase in packet delay times in the received packets and lasts until one or some combination of the following conditions occurs: 1) the increase in packet delay times has continued for a sufficient period of time; or 2) the packet delay times have decreased to an acceptable level.

In another aspect, the invention is directed to receiving and processing digital audio signals, in which packets of digital audio data are received across a transmission channel, and are buffered using a buffer delay so as to accommodate different packet delays through the transmission channel. The buffered packets are then processed to produce an output audio signal. The buffer delay periodically is adjusted based upon a recommended buffer delay, the recommended buffer delay being recurrently updated, starting from an initial value, as follows. Initially, the recommended buffer delay is caused to decrease over time (e.g., in accordance with a function that is fixed for at least an extended period of time, such as a linear decline) until an underflow condition (e.g., if a function of packet delays over an observed interval exceeds a specified threshold) is identified. In response to identifying the underflow condition, the recommended buffer delay is increased (e.g., in an amount that is independent of specific packet delays, such as a constant value). The foregoing recommended-buffer-delay-updating steps are then repeated.

By continuously and gradually decreasing recommended buffer delay, subject to periodic increases, in the foregoing manner, the present invention often can keep the recommended buffer delay within a reasonable range. That is, the buffer delay typically can be continuously maintained at a value that represents an appropriate trade-off between minimizing lost packets and minimizing communications delay.

Preferably, packet delay for a subject packet is determined based upon a transmission timestamp included within the subject packet. While the above-referenced increase in the recommended buffer delay preferably is independent of specific packet delays (other than, e.g., satisfying a threshold condition to trigger the increase), in alternative embodiments the increase may in fact be based upon a function of packet delays (e.g. that occur during an observed interval), such as a continuously varying function or the use of multiple thresholds with a different increment at each threshold.

In certain embodiments of the invention, the actual buffer delay adjustment in response to a change in the recommended delay does not occur until a pause in the transmission is identified. In others, the buffer delay is adjusted immediately based on any change in the recommended buffer delay.

The foregoing summary is intended merely to provide a brief description of the general nature of the invention. A more complete understanding of the invention can be obtained by referring to the claims and the following detailed description of the preferred embodiments in connection with the accompanying figures.

## BRIEF DESCRIPTION OF THE DRAWINGS

Figure 1 illustrates a simple block diagram of the receiving portion of a conventional VoIP system.
Figure 2A illustrates a transmitter timeline; Figure 2B illustrates a received packet timeline, and Figure 2C illustrates a received packet timeline after buffering, using a conventional fixed-delay jitter buffer.

Figure 3 illustrates a simple block diagram of a VoIP receiver according to the present invention.

Figure 4 is a flow diagram illustrating a technique for modifying a recommended jitter buffer delay according to the present invention.

Figure 5 is a flow diagram illustrating a technique for selecting an interval of received packets according to the present invention.

Figure 6 illustrates a timeline of received data packets and provides an example of the technique illustrated in Figure 5.

Figure 7 illustrates a timeline of recommended jitter buffer delays and provides an example of the technique illustrated in Figure 4.

Figure 8 is a flow diagram illustrating a technique for modifying the jitter buffer delay based on a recommended delay.

## DESCRIPTION OF THE PREFERRED EMBODIMENT(S)

Controlling Jitter Buffer Delay.

In this section, we discuss certain concepts in connection with controlling jitter buffer delay. We begin with a simple statement. If neither transmitter, network nor receiver are losing or changing the order of audio, then one-way delay may only grow in time.

Indeed, if A0 and B0 are some points in a source audio (transmitter input), point B0 is after point A0; A1 and A0 are corresponding points in the receiver output audio and T(X) is the time of event X, then

$$T(B1) - T(A1) \geq T(B0) - T(A0),$$

because all audio that filled time segment [T(A0), T(B0)] is now in segment [T(A1), T(B1)]. That means

$$T(B1) - T(B0) \geq T(A1) - T(A0),$$

which proves the statement.

That is not absolutely true in the digital case because the transmitter and the receiver can have different timers. However, it is close to being true, at least if we are assuming that their clocks are synchronized, in order to simplify the analysis.

When the jitter buffer is empty, it has no other choice but to keep the audio channel in underflow state. When a packet is finally received, it will be sent to audio channel. From that point forward all other packets will be delayed at least in an amount equal to the delay of that packet.

While the audio channel is in an underflow state, it will fill that gap in the time with some sound — complete silence, noise or some other kind of artificial sound. In any event, there will be some degradation of audio quality during that gap.

The next gap may be caused only by a packet with a bigger delay than the packet that caused the current gap had. The larger the jitter buffer delay is, the lower the likelihood of audio degradation caused by a gap will be. That means a sufficient jitter buffer delay can help to recover from network time jitter without audio quality losses. There are two conclusions can be made from that discussion.

First, increasing the jitter buffer delay is an essential effect which should happen more or less automatically in any reasonable jitter buffer implementation. Second, in order to reduce accumulated delay, some audio should be discarded. That can be done by a transmitter, a jitter buffer or a receiver audio channel.

Of course, dropping of some audio data might also produce degradation of audio quality, but that can be a momentary degradation that will remove longterm discomfort caused by a big delay. Also, the dropping of audio data might be scheduled to occur during periods when the audio data is not critical (e.g., during periods of presumed pauses or other silence). The ability to increase or decrease jitter buffer delay raises a very important question: how big should the new delay be? If the delay is too short, it will result in additional gaps caused by network time jitter before the delay grows to a reasonable size. If the chosen delay is still too big, we should reduce it again, which will cause another degradation of audio.

A transmitter may discard some audio if it supports DTX (Discontinuous transmission) feature. When the transmitter detects silence in the input audio, it stops sending packets to the communications channel 2 during that silent segment. That, in its turn, gives to the receiver freedom in the choice of the proper moment to begin resuming audio after the silence interval. At that moment, it is possible to reduce accumulated delay.

However, it is not always acceptable to use the DTX feature. Moreover, even if that feature is used, there is no guarantee that there will be enough silence to maintain an acceptable delay. Finally, the same problem still would remain - what size of delay should be chosen during the delay reduction. Accordingly, the jitter buffer should start to discard audio packets itself in order to provide a desirable level of control over the jitter buffer delay.

The so-called "fixed delay" jitter buffer scheme is the simplest in concept, although not in implementation. At the start of a session the jitter buffer keeps incoming packets for a predefined amount of time. That initial delay should be bigger than the time jitter in the network. In that case, we will never have gaps in audio. That rigid scheme starts to experience problems when delay in the network exceeds the expected delay. It also has some technical issues with compensating for differences in transmitter and receiver timers. Finally, it results in a large delay even when network conditions are good.

Most conventional "adaptive delay" jitter buffer techniques utilize a natural process of delay accumulation. They typically start a session with small (or even zero) delay. That delay then will increase automatically when the jitter buffer becomes empty, resulting in audio degradation at such moments. The receiver ultimately will be capable of reproducing any part of the audio stream. However, the price for that result is unlimited growth of delay, without any provisions for its reduction.

The subject of the present invention is a technique and an adaptive jitter buffer having delay reduction that tends to keep the buffer's delay in reasonable boundaries. A technique according to the present invention can be used, e.g., for evaluation and modification of delay on a continuous basis, after a silent segment when a transmitter is utilizing the DTX feature, or when the receiver itself detects a period of silence.

Recommended Buffer Delay Adjustment.

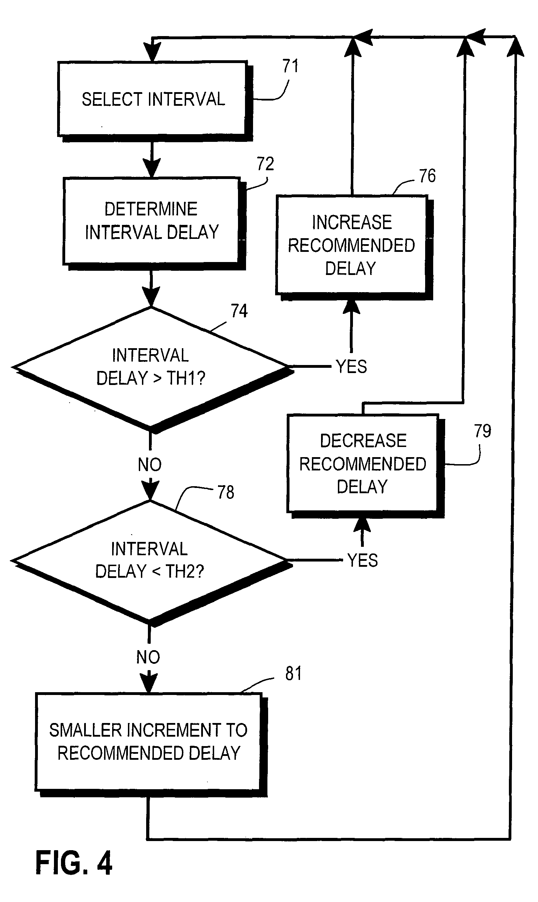

Figure 3 illustrates a simple block diagram of a VoIP receiver 50 according to the present invention. As shown, receiver 50 is identical to receiver 1, shown in Figure 1, except that receiver 50 includes an element 52 (which may be implemented entirely in hardware, entirely in software or firmware, or in any combination thereof) for adjusting the delay of buffer 4. More specifically, element 52, utilizing techniques according to the present invention, element 52 monitors the data packets output by interface 3, i.e., in the order in which they are received, maintains and updates a recommended buffer delay, and then alters the actual delay of buffer 4 in accordance therewith.

In order to accomplish such an adjustment, element 52 utilizes a two-step process in which a recommended delay is determined and then the actual delay of buffer 4 is modified based on this recommended delay. As discussed in more detail below, such a modification may be made immediately upon each determination that the recommended delay should be changed or may be deferred until a more appropriate time for making the actual delay modification.

Figure 4 illustrates a flow diagram for generating the recommended delay according to a representative embodiment of the present invention. Initially, in step 71 an interval of received data packets (e.g., as output from interface 3) is selected. The preferred technique for selecting such an interval is discussed in more detail below. However, generally speaking it is preferable to select contiguous intervals of received data packets on-the-fly, i.e., selecting break points at which the previous interval is deemed to have completed and a new interval is deemed to have begun, as each new data packet is received. Accordingly, in the preferred embodiments of the invention the intervals can and will have different durations, and as soon as an interval is deemed complete it will be ready for processing according to the other steps of the present technique.

In step 72, an "interval delay" $d_j$ is determined based on the packet delays during the interval. For this purpose, each received packet is deemed to have a packet delay which may be defined in any of a variety of different ways. In the preferred embodiment of the invention, the packet delay for an individual packet is that packet's relative packet delay *RelativeDelay$_i$*, as defined below. However, any of a variety of other techniques may be utilized for determining packet delay.

In the preferred embodiments of the invention, the interval delay $d_j$ is defined as the maximum packet delay (e.g., the maximum *RelativeDelay*) during the interval. However, any other function of the packet delays for the packets received during the subject interval may instead be used, such as the mean or the median.

In step 74, a determination is made as to whether the interval delay $d_j$ identified in step 72 is greater than a specified first threshold TH1. Preferably, TH1 is the value of the current recommended delay *Rdly* for the jitter buffer 4. However, TH1 instead may be any other value, such as a multiple, or other function, of the current recommended delay *Rdly* for the jitter buffer 4.

If the test of step 74 is satisfied, then in step 76 the recommended delay *Rdly* is increased. In the preferred embodiment of the invention, this is accomplished by simply incrementing the recommended delay *Rdly* by a fixed amount RDLY_BIG_BUMP. This amount may be, e.g., 10-400 milliseconds (ms), but more preferably it is 20 milliseconds (i.e., 160 samples in the current embodiment) for typical communications channels 2, down to 10 milliseconds for very good communications channels 2. The larger the value of RDLY_BIG_BUMP that is used, the sooner the jitter buffer will reach its proper level of recommended delay, but larger values create a danger of overshoot.

Alternatively, the increase in step 76 may be variable, such as a function of the difference between the interval delay $d_j$ and TH1. In any event, after step 76, processing returns to step 71 to select and process the next interval.

If the test of step 74 is not satisfied, then processing instead proceeds to step 78, in which a determination is made as to whether or not the interval delay $d_j$ is less than a second threshold TH2. Preferably, TH2 is the value of the current recommended delay $Rdly$ for the jitter buffer 4 less a safety margin RDLY_SAFE. Such a safety margin RDLY_SAFE preferably is a fixed value on the order of, or larger than, the value of RDLY_BIG_BUMP. It may be, for example, 40 milliseconds as a default. However, TH2 instead may be any other value, whether fixed or variable. For example, it may even be 0 or, in the alternative, may be a multiple, or other function, of the current recommended delay $Rdly$ for the jitter buffer 4.

If the test of step 78 is satisfied, then processing proceeds to step 79 in which the recommended delay $Rdly$ is decreased. In the preferred embodiments of the invention, the amount of such reduction is based on the duration of the interval and, more preferably, is proportionate to the duration of the interval, i.e., $Rdly_j = Rdly_{j-1} - I / TCdly$, where $I$ is the duration of the interval in milliseconds and $TCdly$ is a behavioral parameter of the system. The smaller the time constant $TCdly$ is, the more aggressively the jitter buffer 4 will reduce delay. In the preferred embodiments of the invention, $TCdly$ is selected from the interval 100-1000 (again, with $I$ expressed in milliseconds). The present embodiment uses a value of 240 as a default for the $TCdly$ time constant. If the RDLY_BIG_BUMP value is increased beyond the nominal value suggested above, it might be advisable to reduce the time constant $TCdly$ in order to compensate for overshoots.

If the test of step 78 is not satisfied, then processing proceeds to step 81, in which the recommended delay $Rdly$ is incremented, but by a smaller amount RDLY_SMALL_BUMP (preferably a substantially smaller amount, e.g., an order of magnitude smaller) than the increment that would be applied in step 76. In the preferred embodiments of the invention, RDLY_SMALL_BUMP is fixed. For example, it might be on the order of a couple milliseconds (i.e., an order of magnitude less than RDLY_BIG_BUMP) and, more preferably, is 1 millisecond.

Alternatively, the increase in step 81 may be variable, such as a function of the difference between the interval delay $d_j$ and TH1 and/or TH2. In any event, after step 78 processing returns to step 71 to select and process the next interval.

Still further, it is noted that step 81 might be omitted completely (e.g., making RDLY_SMALL_BUMP equal to 0).

Summarizing the specific currently preferred embodiment, the recommended delay value $Rdly$ is updated recurrently at the end of each interval based on the interval delay $d_j$ and the duration $I$ of the interval, as follows:

- If $d_j > Rdly_{j-1}$, then

$$Rdly_j = Rdly_{j-1} + \text{RDLY\_BIG\_BUMP};$$

- Else if $d_j > (Rdly_{j-1} - \text{RDLY\_SAFE})$, then

$$Rdly_j = Rdly_{j-1} + \text{RDLY\_SMALL\_BUMP};$$

- Else $Rdly_j = Rdly_{j-1} - I / TCdly$

In the foregoing equations, RDLY_BIG_BUMP, RDLY_SMALL_BUMP, RDLY_SAFE and $TCdly$ are behavioral parameters of the jitter buffer 4. Recommended delay $Rdly$ is increased on per-case basis. It will not be updated many times during an interval and we do not take into consideration how big the interval delay $d_j$ was, except in comparison to the two thresholds indicated above. The ratio between RDLY_BIG_BUMP and $TCdly$ defines how often an interval having a delay $d_j$ close to $Rdly$ should happen, in order to recommend having that or a larger delay in the jitter buffer 4.

Optional parameters RDLY_SAFE and RDLY_SMALL_BUMP prevent the recommended delay $Rdly$ from going down or from being unduly incremented when relatively small variations in the interval delays occur. The value of RDLY_SMALL_BUMP is smaller (preferably much smaller) than the value of RDLY_BIG_BUMP and, as noted above, can be anything down to 0.

<u>Selection of Interval.</u>

In the foregoing technique, recommended delay $Rdly$ is updated at the end of each interval $j$ based upon the interval delay $d_j$. We now discuss options for selecting the individual intervals. The simplest technique is to utilize regular intervals having a fixed duration. If this technique is adopted, the recommended delay $Rdly$ is updated at periodic intervals.

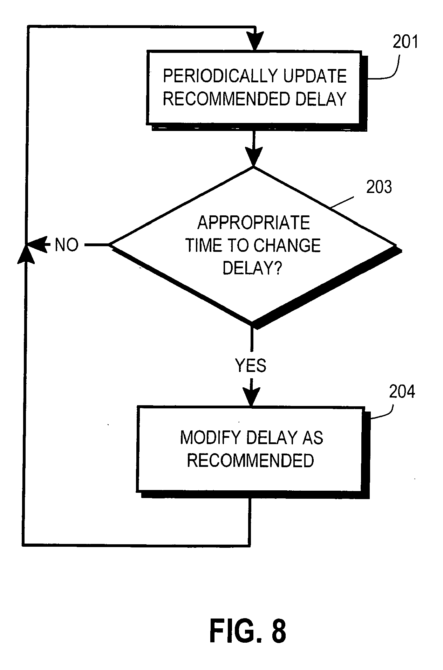

As a result, an appropriate time for changing the actual delay of a buffer 4 often will not coincide with the updating of the recommended delay *Rdly*. In such a case, a technique such as illustrated in Figure 8 (discussed further below) may be utilized to select the appropriate time for changing the actual buffer delay.

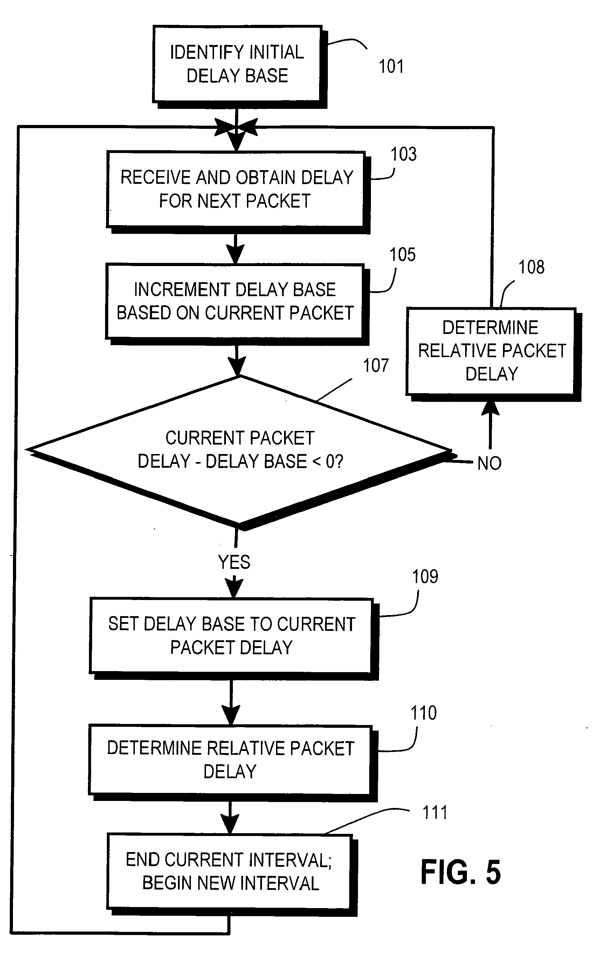

More preferably, the intervals utilized in the present invention have variable durations that are selected to roughly correspond to appropriate points in time to adjust the buffer delay. A technique for selecting when to end a current interval and begin a new one is now described with reference to Figure 5.

In step 101, an initial value is assigned to a "sliding delay base" variable *dm*. This initial value is not critical because, as will become apparent below, after a short period of time its value will adjust to the properties of communications channel 2. Its value might be set, e.g., to the raw delay of the first packet received, to a function of such raw delay or to a value selected based on historical trends.

In this regard, the raw delay *RawDelay$_i$* of a received packet i preferably is defined as the difference between the time that the packet is received by receiver 50 and the timestamp that was included within the packet by the transmitter. The raw delay of a packet generally does not have meaning as an absolute value; only the difference between raw delays does. According to the Real Time Transport Protocol (RTP) specification, the transmitter should add the same arbitrary value to all timestamps in the current session.

As will become apparent below, the sliding delay base roughly can be defined as the minimum raw delay for some period of time. The recurrent way in which it is calculated in the preferred embodiments of the invention is discussed in more detail below.

In step 103, a new packet is received and its raw delay *RawDelay$_i$* is identified. Again, this value preferably is determined by simply subtracting the embedded timestamp from the time that the packet was received.

In step 105, the sliding delay base is incremented based on the current packet. Preferably, the increment in the sliding delay base is based on the difference between the reception time for the current packet and the reception time for the previously received packet. More preferably, the delay base increases linearly at a constant rate between received packets. Thus,

$$dm_i = dT/TCr + dm_{i-1},$$

where

$dm_i$ is the new value of the delay base;

$dT$ is the difference in receive time (alternatively, the difference in transmit times may be used instead) between the current packet and a previous one that was the last used for updating the dm value;

$TCr$ is a behavioral parameter that defines the time interval needed for the sliding base *dm* to rise 1 ms if no smaller raw delay was encountered; and

$dm_{i-1}$ is the value of the previous delay base.

The *TCr* value preferably is less than 1000 (assuming that *dT* is expressed in milliseconds) in order to accommodate possible differences between the transmit and receive clocks (which might be up to 0.1 % off). The better network condition, the larger the value of *TCr* can be used. Values in the interval from 100 to 1000 appear to be reasonable. A value like 240 can be considered as a default value.

In step 107, a determination is made as to whether the new raw packet delay *RawDelay$_i$* is less than or equal to the current delay base *dm$_i$*. If not, then processing proceeds to step 108 in order to determine the relative packet delay for the new packet (discussed below), before returning to step 103 to receive and process of the next packet. On the other hand, if the determination in step 107 is answered in the affirmative, then the packet may be referred to as a "floor packet"; and processing proceeds to step 109 based on the identification of a new floor packet.

In step 109, the delay base *dm$_i$* is adjusted to the new raw packet delay *RawDelay$_i$*, i.e., *dm$_i$= RawDelay$_i$*. Then, in step 110 the relative packet delay for the new packet is determined.

It is noted that the processing preferably is identical in steps 108 and 110. More preferably, the relative packet delay for the new packet *RelativeDelay$_i$* is determined as the difference between the raw delay *RawDelay$_i$* and the sliding delay base *dm$_i$* for a given packet *i*. This calculation should be performed after the sliding delay base adjustment, if any, is done for the subject packet in step 109. As a result, the relative packet delay can never be negative. If the relative packet delay is 0, then the packet is referred to as a "floor packet".

In step 111 the current packet is deemed to be the last packet in the current interval (i.e., because of the determination made in step 107). That current interval can then be processed, e.g., in accordance with the technique described above in connection with Figure 4. At the same time, a new interval is deemed to have begun, i.e., using the raw delay of the current packet as the initial delay base *dm* for the new interval. Thereafter, processing returns to step 103 in order to receive and process the first packet for the new interval.

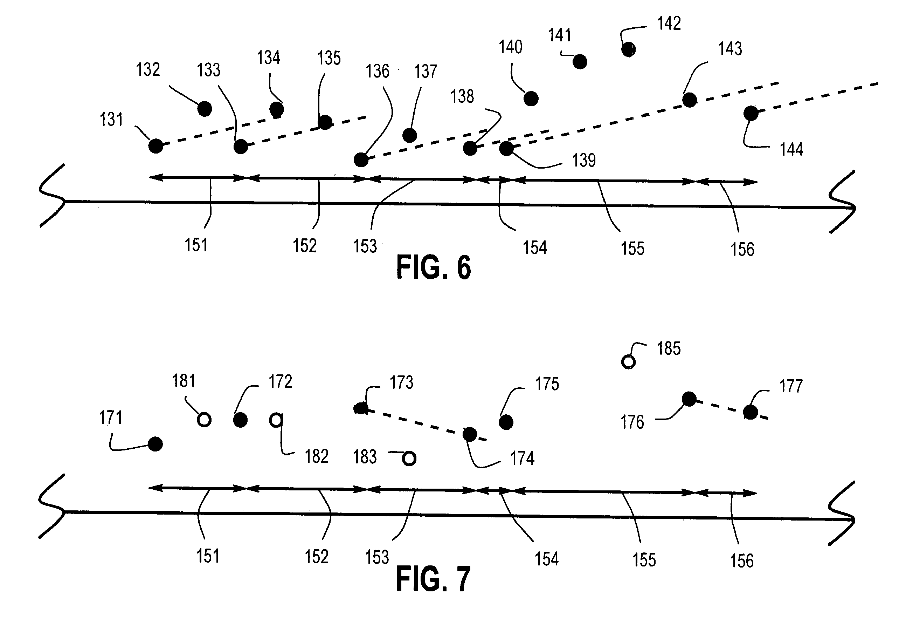

An example is now described, with reference to Figures 6 and 7 to illustrate the preferred embodiment of the foregoing techniques for selecting intervals and updating the recommended delay based on them. Specifically, Figure 6 shows a timeline of received packets 131-144, with the horizontal axis indicating the time of receipt for each of packets 131-144, and with the vertical axis indicating the raw packet delay for such packet. Figure 7 illustrates a timeline of recommended jitter buffer delays 171-177, with the horizontal axis indicating time and being aligned with the horizontal axis in Figure 6, and with the vertical axis indicating the recommended jitter buffer delay at that point in time.

Referring to Figure 6, the sliding delay base $dm$ begins at a point indicated by the raw delay of received packet 131 and increases linearly until it exceeds the raw delay of a subsequently received packet 133, at which point packet 133 is designated as a floor packet (marking the end of interval 151 and the beginning of the next interval 152), and the value of the sliding delay base $dm$ is reset to the raw delay of packet 133. This process repeats over time, ultimately defining intervals 151-156.

At the end of each interval 151-156, the recommended buffer delay $Rdly$ is adjusted, as shown in Figure 7, starting from an initial value 171. For example, with respect to interval 151, the interval delay 181 (which in the present embodiment is the maximum relative delay during interval 151) is provided by packet 132. Interval delay 181 clearly is larger than the currently recommended buffer delay $Rdly$ 171. Accordingly, recommended delay 171 is increased by RDLY_BIG_BUMP, to a value 172.

Next, during interval 152 the interval delay 182 (provided by packet 134) is equal to the currently recommended buffer delay $Rdly$ 172. Accordingly, recommended delay 172 is increased by RDLY_SMALL_BUMP, to a value 173.

During interval 153, the interval delay 183 (provided by packet 137) is less than the currently recommended buffer delay $Rdly$ 173. Accordingly, recommended delay 173 is linearly decreased over the duration of interval 153, to a value 174. The process is repeated to provide subsequent recommended buffer delays $Rdly$ 175-177.

Interval selection according to the present invention tends to automatically provide updates to the recommended buffer delay at times when updates to the actual buffer delay would be appropriate. For instance, as shown in Figure 6, a new interval (e.g., interval 155) typically will start when there is a fairly sudden increase in the delay times of received packets. Because the sliding delay base increases over time, such a new interval will continue until the packet delays have dropped to a more typical value, until the increased packet delays have been continuing for a sufficiently long period of time, or some combination of the foregoing criteria. In either case, the jitter buffer 4 likely will be depleted or near depleted by the time that the recommended buffer delay is increased. As a result, increasing the actual buffer delay at that point typically will not provide significantly more degradation than already will be occurring as a result of the increased in delays in communications channel 2.

Nevertheless, the present invention also contemplates implementations in which the recommended delay does not become effective until a more appropriate time, such as when there is detected with a pause in the audio stream. Such a technique is described in more detail with reference to Figure 8.

In step 201, the recommended buffer delay periodically is updated. This step may be performed, e.g., in accordance with the techniques described above in connection with Figures 4 and 5 above.

In step 203, a determination is made as to whether or not the present time is appropriate for modifying the actual buffer delay. In this regard, increasing buffer delay typically will result in a temporary pause in the output audio stream, while decreasing buffer delay typically will necessitate discarding some of the packets in the jitter buffer 4. Thus, either case can be easily accommodated if there is a natural pause in the transmitted audio. That is, neither increasing the duration of such a pause (when increasing buffer delay) nor discarding audio data which is simply silence (when decreasing buffer delay) typically will be very noticeable during the occurrence of such a pause. As noted above, there are also other situations in which increasing or decreasing buffer delay will not be very noticeable in the context of the surrounding circumstances, e.g., where the buffer 4 is already depleted of data packets to read out.

With regard to detection of periods of silence or pause, such periods may be indicated by the transmitter if it is operating in DTX mode. Alternatively, the receiver itself might detect such periods, e.g., by detecting a packet or a sequence of packets that have a volume level below a specified threshold.

If the test of a step 203 is not satisfied, then processing returns to step 201 to continue updating the recommended buffer delay. On the other hand, if the test is satisfied then processing proceeds to step 204, in which the actual buffer delay is modified based upon the recommended delay. In certain embodiments of the invention, any such modification may be limited in scope. For example, if it is recommended to decrease the buffer delay in an amount equivalent to 80 packets and only 60 "silence" packets are detected, then adjustment of the actual delay might be limited to dropping only the 60 "silent" packets.

System Environment.

Nearly all of the methods and techniques described herein can be practiced with a general-purpose computer system. Such a computer typically will include, for example, at least some of the following components interconnected with each other, e.g., via a common bus: one or more central processing units (CPUs), read-only memory (ROM), random access memory (RAM), input/output software and/or circuitry for interfacing with other devices and for connecting to one or more networks (which in turn may connect to the Internet or to any other networks), a display (such as a cathode ray tube display, a liquid crystal display, an organic light-emitting display, a polymeric light-emitting display or any other thin-film display), other output devices (such as one or more speakers, a headphone set and/or a printer), one or more input devices (such as a mouse, touchpad, tablet, touch-sensitive display or other pointing device; a keyboard, a microphone and/or a scanner), a mass storage unit (such as a hard disk drive), a real-time clock, a removable storage read/write device (such as for reading from and/or writing to RAM, a magnetic disk, a magnetic tape, an optomagnetic disk, an optical disk, or the like), and a modem (which also may connect to the Internet or to any other computer network via a dial-up connection). In operation, the process steps to implement the above methods typically are initially stored in mass storage (e.g., the hard disk), are downloaded into RAM and then executed by the CPU out of RAM.

Suitable computers for use in implementing the present invention may be obtained from various vendors. Various types of computers, however, may be used depending upon the size and complexity of the tasks. Suitable computers include mainframe computers, multiprocessor computers, workstations, personal computers, and even smaller computers such as PDAs, wireless telephones or any other appliance or device, whether stand-alone, hard-wired into a network or wirelessly connected to a network. In addition, although a general-purpose computer system has been described above, a special-purpose computer may also be used. In particular, any of the functionality described above can be implemented in software, hardware, firmware or any combination of these, with the particular implementation being selected based on known engineering tradeoffs. In this regard, it is noted that the functionality described above primarily is implemented through fixed logical steps and therefore can be accomplished through programming (e.g., software or firmware), an appropriate arrangement of logic components (hardware) or any combination of the two, as is well-known in the art.

It should be understood that the present invention also relates to machine-readable media on which are stored program instructions for performing the methods of this invention. Such media include, by way of example, magnetic disks, magnetic tape, optically readable media such as CD ROMs and DVD ROMs, semiconductor memory such as PCMCIA cards, etc. In each case, the medium may take the form of a portable item such as a small disk, diskette, cassette, etc., or it may take the form of a relatively larger or immobile item such as a hard disk drive, ROM or RAM provided in a computer.

The foregoing description primarily emphasizes electronic computers. However, it should be understood that any other type of computer may instead be used, such as a computer utilizing any combination of electronic, optical, biological and/or chemical processing.

Additional Considerations.

In the embodiments described above, there are several parameters that define the behavior of the jitter buffer. These parameters preferably are selected based on the particular network conditions (e.g., the quality of the network or other communications channel 2). It does not appear that changing these parameters from the nominal values suggested above dramatically will improve the behavior of the jitter buffer, but undesirable results might be produced if such values are chosen unreasonably (e.g., significantly outside of the ranges indicated above).

The description above covers a number of variations on and embodiments of the present invention. However, it should be understood that other variations also are possible. For example, the above-described embodiments do not make any provision for a maximum jitter buffer delay. Limiting such delay to a specified value is straightforward to implement and often will be desirable.

In the embodiments described above, buffer delay is modified at discrete points in time. At the same time, the embodiments described above contemplate a "discharging" of the jitter buffer delay, in which the recommended delay is effectively decreased on a continuous, monotonic and gradual basis until bumped up based upon a detection that an interval delay (or similar observation of packet delay) satisfies some specified criterion (e.g., an underflow condition). In an alternate implementation, it is possible to gradually decrease the actual delay of the jitter buffer on a continuous basis (e.g., at the same rate indicated above for the reduction in the recommended delay) and then only increase such delay at discrete time points (e.g., in the same manner as indicated above). Similar to the comment made above, such continuous and monotonic decreases may be subject to a floor, meaning that the actual buffer delay is not allowed to fall beneath some specified minimum delay.

Still further, while the embodiments described above compare the interval delay to the recommended delay at the beginning of the interval (i.e., prior to any decrease during the interval), it is possible instead to compare the interval delay to the recommended delay at the beginning of the interval, reduced by the applicable "discharging" during the interval.

As noted above, the technique for selecting intervals in the preferred embodiments of the invention often inherently tend to provide good time points for modifying the actual buffer delay. For example, by waiting until the increase in packet delay times has continued for a sufficient period of time, the packet delay times (according to any desired criteria) have decreased to an acceptable level, or any combination of the foregoing, the change often will occur when a pause would have happened anyway. Similar techniques that achieve similar results instead may be utilized.

In the foregoing embodiments, recommended buffer delay is adjusted in a fairly straightforward manner based upon the interval delay, however defined. It should be understood that more complicated processing instead may be implemented. The precise nature of such processing typically will depend upon how the interval delay is defined. For instance, if the interval delay is the maximum raw packet delay during the interval and a single packet having an unusually large delay is received, such a situation might be recognized as an anomaly and, therefore, the delay associated with that packet ignored.

Similarly, if a number of packets having a large delay are encountered, but it is too late to reproduce those packets even if the buffer delay were to be increased (e.g., because the time for playing those packets already has passed), then a decision might be made not to increase the recommended buffer delay at this time, but instead to store the information and make a decision later, e.g., if additional groups of packets with long delays are encountered. Then, if it is determined that groups of longer-delayed packets will continue to be received on a regular basis (e.g., because certain groups of packets take a different path through the communications channel 2), at that point the recommended buffer delay may be increased. Alternatively, if a determination ultimately is made that the single group of longer-delayed packets was a true anomaly, then the decision not to increase the jitter buffer delay at that time would have been the correct decision.

While the techniques described above are applicable to VoIP, they also may be applied to other packet-based real-time audio and/or video signals transmitted over any of a variety of different communications channels. Accordingly, the particular embodiments described above are not intended to be limiting.

Several different embodiments of the present invention are described above, with each such embodiment described as including certain features. However, it is intended that the features described in connection with the discussion of any single embodiment are not limited to that embodiment but may be included and/or arranged in various combinations in any of the other embodiments as well, as will be understood by those skilled in the art.

Similarly, in the discussion above, functionality may be ascribed to a particular module or component. However, unless any particular functionality is described above as being critical to the referenced module or component, functionality may be redistributed as desired among any different modules or components, in some cases completely obviating the need for a particular component or module and/or requiring the addition of new components or modules. The precise distribution of functionality preferably is made according to known engineering tradeoffs, with reference to the specific embodiment of the invention, as will be understood by those skilled in the art.

Thus, although the present invention has been described in detail with regard to the exemplary embodiments thereof and accompanying drawings, it should be apparent to those skilled in the art that various adaptations and modifications of the present invention may be accomplished without departing from the spirit and the scope of the invention. Accordingly, the invention is not limited to the precise embodiments shown in the drawings and described above. Rather, it is intended that all such variations not departing from the spirit of the invention be considered as within the scope thereof as limited solely by the claims appended hereto.

**Claims**

1. An apparatus for receiving and processing digital audio signals, comprising:

    (a) receiving means for receiving packets of digital audio data across a transmission channel;
    (b) buffering means for buffering the received packets using a buffer delay, so as to accommodate different packet delays through the transmission channel; and
    (c) adjustment means for periodically adjusting the buffer delay based upon a recommended buffer delay, the recommended buffer delay being recurrently updated, starting from an initial value, as follows:

        (i) selecting an interval of the received packets;
        (ii) calculating a function of at least one packet delay over the selected interval in order to generate an interval packet delay;
        (iii) increasing the recommended buffer delay if the interval packet delay exceeds a first threshold;
        (iv) decreasing the recommended buffer delay if the interval packet delay is less than a second threshold, the second threshold being not greater than the first threshold; and
        (v) repeating steps (i)-(iv),

    wherein each interval of the received packets has a duration that is based on at least one packet delay during said each interval.

**2.** An apparatus according to claim 1, wherein the interval packet delay is a maximum of the packet delays over the selected interval.

**3.** An apparatus according to claim 1 or 2, wherein steps (i)-(iv) are repeated substantially continuously.

**4.** An apparatus according to claim 3, wherein steps (i)-(iv) are repeated substantially continuously over successive contiguous intervals of the received packets.

**5.** An apparatus according to claim 4, wherein the length of each successive interval is determined by initially using a delay value for a first received packet as a delay base and then systematically increasing the delay base for each successive received packet until the delay base exceeds a delay value for a subsequent received packet, at which point said specified interval is deemed complete.

**6.** An apparatus according to claim 5, wherein once a previous interval is deemed complete, a new interval is deemed to start and the delay base is set to a delay value for the last packet of the previous interval.

**7.** An apparatus according to claim 5 or 6, wherein an amount of incremental increase in the delay base for each received packet is based on a measure of the duration of a current interval.

**8.** An apparatus according to claim 7, wherein the measure of the duration of the current interval is based on a difference in receive times with respect to a currently received packet.

**9.** An apparatus according to any of claims 1 to 8, wherein a range exists between the first threshold and the second threshold, and wherein the recommended buffer delay is increased, but by an amount that is less than a quantity that would be applicable in accordance with step (iii), if the interval packet delay falls within said range.

**10.** An apparatus according to any of claims 1 to 9, wherein the first threshold is a current value of the recommended buffer delay.

**11.** An apparatus according to claim 10, wherein a range exists between the first threshold and the second threshold, and wherein the recommended buffer delay is increased, but by an amount that is less than a quantity that would be applicable in accordance with step (iii), if the interval packet delay falls within said range.

**12.** An apparatus according to any of claims 1 to 11, wherein an amount of decrease in step (iv) is based on an amount of time since the recommended buffer delay was last increased.

**13.** An apparatus according to claim 12, wherein an amount of decrease in step (iv) monotonically increases based on the amount of time since the recommended buffer delay was last increased.

**14.** An apparatus according to any of claims 1 to 13, wherein an amount of increase in step (iii) is independent of packet delays during the interval.

**15.** An apparatus according to any of claims 1 to 14, wherein an amount of increase in step (iii) is a predetermined constant value.

**16.** An apparatus according to any of claims 1 to 15, wherein packet delay for a subject packet is determined based upon a transmission timestamp included within the subject packet.

**17.** An apparatus according to any of claims 1 to 16, wherein the adjustment means waits until it identifies a pause in the transmission before adjusting the buffer delay based on the recommended buffer delay.

**18.** An apparatus according to any of claims 1 to 16, wherein the adjustment means immediately adjusts the buffer delay based on any change in the recommended buffer delay.

**19.** An apparatus according to claim 1, wherein a new interval is deemed to begin whenever there is a sudden increase in packet delay times in the received packets and lasts until at least one of the following conditions occurs: (a) the increase in packet delay times has continued for a sufficient period of time; or (b) the packet delay times have decreased to an acceptable level.

**20.** An apparatus according to any of claims 1 to 19, further comprising audio channel means for processing the buffered packets to produce an output audio signal.

**21.** An apparatus for receiving and processing digital audio signals, comprising:

(a) receiving means for receiving packets of digital audio data across a transmission channel;
(b) buffering means for buffering the received packets using a buffer delay, so as to accommodate different packet delays through the transmission channel; and
(c) adjustment means for periodically adjusting the buffer delay based upon a recommended buffer delay, the recommended buffer delay being recurrently updated, starting from an initial value, as follows:

(i) causing the recommended buffer delay to decrease over time until an underflow condition is identified;
(ii) in response to identifying the underflow condition, increasing the recommended buffer delay; and
(iii) continuously repeating steps (i) and (ii).

**22.** An apparatus according to claim 21, wherein a function at which the recommended buffer delay is caused to decrease in step (i) is fixed for at least an extended period of time.

**23.** An apparatus according to claim 21 or 22, wherein the underflow condition is identified if a function of packet delays over an observed interval exceeds a specified threshold.

**24.** An apparatus according to claim 23, wherein packet delay for a subject packet is determined based upon a transmission timestamp included within the subject packet.

**25.** An apparatus according to any of claims 21 to 24, wherein an amount of increase in step (ii) is independent of specific packet delays.

**26.** An apparatus according to any of claims 21 to 25, wherein an amount of increase in step (ii) is a predetermined constant value.

**27.** An apparatus according to any of claims 21 to 26, wherein the recommended delay decreases linearly in step (i).

**28.** An apparatus according to any of claims 21 to 24, wherein an amount of increase in step (ii) is a function of packet delays over an observed interval.

**29.** An apparatus according to claim 28, wherein packet delay for a subject packet is determined based upon a transmission timestamp included within the subject packet.

**30.** An apparatus according to any of claims 21 to 29, wherein the adjustment means waits until it identifies a pause in the transmission before adjusting the buffer delay based on the recommended buffer delay.

**31.** An apparatus according to any of claims 21 to 30, further comprising audio channel means for processing the buffered packets to produce an output audio signal.

**32.** A computer-readable medium storing computer-executable process steps for receiving and processing digital audio signals, said process steps comprising steps to:

(a) select an interval of received packets;
(b) calculate a function of at least one packet delay over the selected interval in order to generate an interval packet delay;
(c) increase a recommended buffer delay if the interval packet delay exceeds a first threshold;
(d) decrease the recommended buffer delay if the interval packet delay is less than a second threshold, the second threshold being not greater than the first threshold; and
(e) repeat steps (a)-(d),
wherein each interval of the received packets has a duration that is based on at least one packet delay during said each interval.

**33.** A computer-readable medium storing computer-executable process steps for receiving and processing digital audio signals, said process steps comprising steps to:

(a) cause a recommended buffer delay to decrease over time until an underflow condition is identified;
(b) in response to identifying the underflow condition, increase the recommended buffer delay; and
(c) continuously repeat steps (a) and (b).

**FIG. 1 (PRIOR ART)**

**FIG. 3**

EP 1 655 911 A2

EP 1 655 911 A2

FIG. 2A (PRIOR ART)

FIG. 2B (PRIOR ART)

FIG. 2C (PRIOR ART)

```
                    ┌─────────────────┐  71
                    │ SELECT INTERVAL │
                    └─────────────────┘
                            │
                            ▼
                    ┌─────────────────┐  72        ┌──────────────┐  76
                    │    DETERMINE    │            │   INCREASE   │
                    │ INTERVAL DELAY  │            │ RECOMMENDED  │
                    └─────────────────┘            │    DELAY     │
                            │                      └──────────────┘
                            ▼                              ▲
                      ╱─────────╲  74                      │
                     ╱  INTERVAL ╲                         │
                    ╱ DELAY > TH1? ╲──── YES ──────────────┘
                     ╲            ╱
                      ╲─────────╱
                           │
                          NO
                           │                       ┌──────────────┐  79
                           ▼                        │   DECREASE   │
                      ╱─────────╲  78               │ RECOMMENDED  │
                     ╱  INTERVAL ╲                  │    DELAY     │
                    ╱ DELAY < TH2? ╲──── YES ──────└──────────────┘
                     ╲            ╱                         ▲
                      ╲─────────╱                          │
                           │
                          NO
                           │                81
                           ▼
              ┌────────────────────────┐
              │  SMALLER INCREMENT TO  │
              │   RECOMMENDED DELAY    │
              └────────────────────────┘
```

**FIG. 4**

IDENTIFY INITIAL
DELAY BASE — 101

RECEIVE AND OBTAIN DELAY
FOR NEXT PACKET — 103

INCREMENT DELAY BASE
BASED ON CURRENT PACKET — 105

DETERMINE
RELATIVE PACKET
DELAY — 108

CURRENT PACKET
DELAY - DELAY BASE < 0? — 107

NO

YES

SET DELAY BASE TO CURRENT
PACKET DELAY — 109

DETERMINE RELATIVE PACKET
DELAY — 110

END CURRENT INTERVAL;
BEGIN NEW INTERVAL — 111

FIG. 5

FIG. 6

FIG. 7

EP 1 655 911 A2

**FIG. 8**